# EUROPEAN PATENT SPECIFICATION

(11) **EP 4 446 700 B1**
(45) Date of publication and mention of the grant of the patent: **08.10.2025**
(21) Application number: 24152399.2
(22) Date of filing: 17.01.2024
(51) Int. Cl.: G01C 19/72

(54) **MODULATION FOR THERMAL STABILITY IN RESONATOR FIBER OPTIC GYROSCOPE (RFOG)**
MODULATION FÜR THERMISCHE STABILITÄT IN EINEM RESONATOR-GLASFASERGYROSKOP (RFOG)
MODULATION DE STABILITÉ THERMIQUE DANS UN GYROSCOPE À FIBRE OPTIQUE À RÉSONATEUR (RFOG)

(30) Priority: 11.04.2023 US 202318298704
(43) Date of publication of application: 16.10.2024
(73) Proprietor: Honeywell International Inc., Charlotte, NC 28202 (US)
(72) Inventor: SANDERS, Glen A., Charlotte, 28202 (US); SMICIKLAS, Marc, Charlotte, 28202 (US)
(74) Representative: Haseltine Lake Kempner LLP

(56) References cited:
- EP-A1- 3 951 318
- US-A1- 2010 002 239
- US-B1- 9 459 101
- SANDERS GLEN A ET AL: "Improvements to Signal Processing and Component Minaturization of Compact Resonator Fiber Optic Gyroscopes", 2018 DGON INERTIAL SENSORS AND SYSTEMS (ISS), IEEE, 11 September 2018 (2018-09-11), pages 1 - 22, XP033475163, DOI: 10.1109/INERTIALSENSORS.2018.8577190

## Description

### BACKGROUND

Resonator Fiber Optic Gyroscopes (RFOGs) are a type of sensor that measures rotation rate of an object. In one use, RFOGs, along with accelerometers and other sensors, provide data necessary for the proper operation of navigation systems in vehicles such as aircraft, land-based vehicles, and watercraft.

In general, an RFOG uses counterpropagating laser light waves in an optical resonator to determine rotation rate. For example, laser light waves - one in the clockwise (CW) direction and the other in the counterclockwise (CCW) direction - are frequency-tuned to propagate at resonance within an optical fiber ring resonator. The RFOG measures these resonance frequencies of the resonator. In the presence of rotation rate, Q, the resonance frequencies will be different in proportion to the rotation rate (due to the Sagnac Effect), and therefore the two laser light waves will be tuned to different frequencies. For example, the light wave from a first laser, propagating in the CW direction, is tuned to a first frequency (designated as f₀). The light wave from a second laser, propagating in the CCW direction, is tuned to a frequency f₀ plus a differential component designated as Δf_{Ω}. This differential component, Δf_{Ω}, is then measured to determine the rotation rate, Q; the output of the RFOG.

Over time, the design of RFOGs has evolved to provide more accurate rotation rate data by addressing various sources of error and shortcomings in prior designs. These improvements have dealt with issues such as intensity error, interference error, phase noise, relative frequency jitter, backscatter and laser instability to name a few.

Despite the many advances in RFOG design, developers continue to improve the RFOG design with the goal to produce rugged, low cost navigation-grade RFOGs that are compatible with commercial and military aircraft navigation performance. During recent testing of a current RFOG design, we discovered a new source of error in the operation of RFOGs using a multi-frequency laser source (MFLS) having a master laser and two slave lasers. As the RFOG was operated over a temperature range, it was determined that the new error source, if uncorrected, would destabilize the lock of the master laser to the resonance frequency of the fiber optic resonator leading to high angle random walk (ARW) and bias instability, and thus unacceptable RFOG performance.

SANDERS GLEN A ET AL: "Improvements to Signal Processing and Component Minaturization of Compact Resonator Fiber Optic Gyroscopes",2018 DGON INERTIAL SENSORS AND SYSTEMS (ISS), IEEE, 11 September 2018 (2018-09-11), pages 1-22, disclose a RFOG with a fiber optic resonator, and a master and two slave lasers as light sources, with the optical frequencies of the two slave lasers being locked to the frequency of the master in respective optical phase locks, to provide respective clockwise CW and counterclockwise CCW signals to the fiber optic resonator. The optical signal from the master laser is combined with the optical signal from the slave laser to be injected as CW into the resonator coil.

EP 3 951 318 A1 also discloses a RFOG with a fiber optic resonator, and a master and two slave lasers as light sources, with the optical frequencies of the two slave lasers being locked to the frequency of the master in respective optical phase locks, to provide respective clockwise CW and counterclockwise CCW signals to the fiber optic resonator. The optical signal from the master laser is combined with the optical signal from the slave laser to be injected as CW into the resonator coil.

Thus, there is a need in the art for an RFOG that addresses this new source of error in an RFOG using an MFLS to produce a stable output with low angle random walk and low bias instability over temperature.

### SUMMARY

A resonator fiber optic gyroscope (RFOG) is provided. The RFOG includes a fiber optic resonator; a master laser that is configured to transmit a light wave with a frequency that is locked to a resonant frequency of the fiber optic resonator; a first slave laser that is configured to transmit a light wave at a frequency that is phase locked to the frequency of the master laser in a first optical phase lock loop at a first offset frequency to provide a clockwise signal (CW) to the fiber optic resonator; a second slave laser that is configured to transmit a light wave at a frequency that is phase locked to the frequency of the master laser in a second optical phase lock loop at a second offset frequency to provide a counterclockwise signal (CCW) to the fiber optic resonator; and a modulator that shifts the frequency of the light wave from the master laser, prior to combination of the light wave from the master laser with the light wave from the first slave laser for transmission to the fiber optic resonator, by a first frequency to prevent interference of the light wave from the master laser with the light wave from the first slave laser caused by pick-up from the master laser in the first optical phase lock loop.

### BRIEF DESCRIPTION OF THE DRAWINGS

Embodiments of the present invention can be more easily understood and further advantages and uses thereof more readily apparent, when considered in view of the description of the following figures in which:
FIG. 1 is a block diagram of one embodiment of a resonator fiber optic gyroscope (RFOG).
FIG. 2 is a block diagram of one embodiment of a portion of the RFOG of FIG. 1 that illustrates pick-up of a signal by a first slave laser that corrupts the output of the first slave laser and a frequency shifter used to shift the frequency of the master laser to avoid interference with the corrupted output of the first slave laser.
FIGs. 3A, 3B, and 3C are frequency diagrams that illustrate the ideal frequency spectrum for the master and slave lasers (FIG. 3A), corruption of the signal from the slave laser (FIG. 3B), and frequency shifting of the master laser according to one embodiment of the present invention (FIG. 3C) to avoid interference with the corrupted slave laser signal.
Figure 4 is a flow chart of one embodiment of a process for reducing interference between a corrupted light wave from a slave laser and a light wave from a master laser.

In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the claims. The following detailed description is, therefore, not to be taken in a limiting sense.

In recent experiments with a resonator fiber optic gyroscope (RFOG) using a multi-frequency laser source (MFLS), we determined that an undesired error current being picked up by a slave laser in the optical phase lock loop of the MFLS produces noise on the output of the RFOG that is equivalent to angle random walk and bias instability over temperature. Additionally, we discovered that the error current picked up in the optical phase lock loop also introduced an undesired frequency modulation (different from the intended time-varying frequency shift) which modulates the frequency of the slave laser and puts sidebands on the slave laser frequency that are integer multiples of an offset frequency (referred to as ΔF₁ below). This "pick-up" could be electrostatic pick-up, or via ground loops on electronics cards or in electronics components. The unintended laser sidebands generated or caused by this pickup can then make some of the light from the slave laser be at the same frequency as the light from the master laser. So, the light from the master laser and the corrupted light from the slave laser may interfere at low frequency. Since the master and slave lasers take different paths through fibers to the resonator, their phases vary with temperature. This causes larger random variations in the lock of the master laser to the resonator, and of the lock of the slave lasers to the resonator. In turn, this causes the increased noise that we discovered that is equivalent to angle random walk and bias instability over temperature.

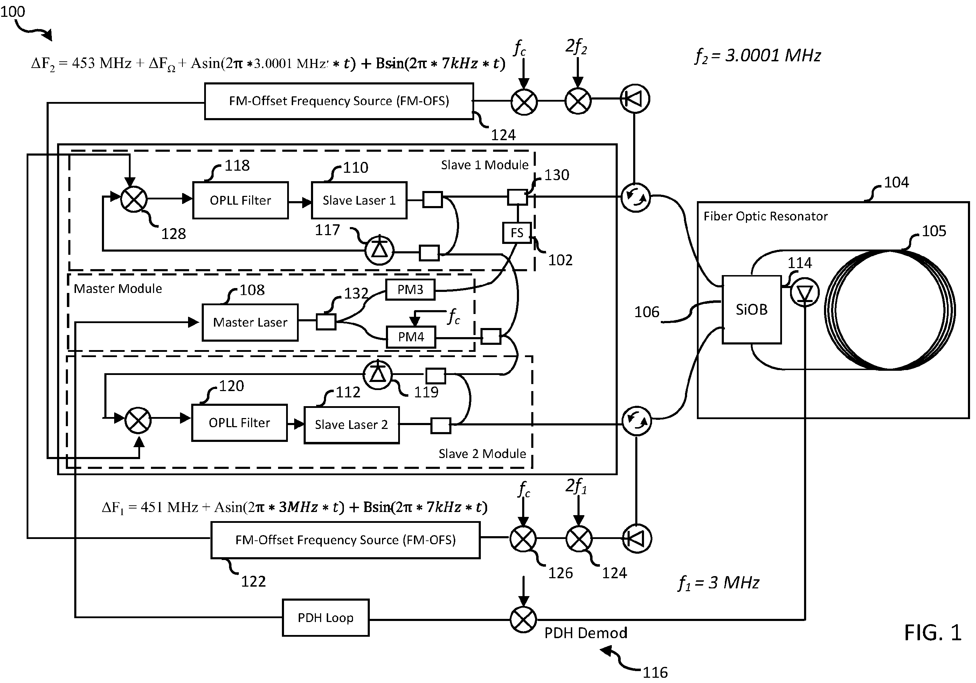

Figure 1 illustrates one embodiment of a resonator fiber optic gyroscope (RFOG), indicated generally at 100, including a multi-frequency laser source (MFLS) that includes a frequency shifter (FS) 102 in the path of the master laser 108 that is intended to reduce the interference between a light wave from the master laser 108 and a light wave from a first slave laser 110 caused by pick-up from the master laser 108 at low frequency that lead to the noise that is equivalent to angle random walk and bias instability over temperature (described in more detail below).

RFOG 100 includes a fiber optic resonator with a sensing or resonator coil 105. In one embodiment, fiber optic resonator 104 includes resonator coil 105 formed from, in a nonlimiting example, 100 m of polarization maintaining fiber wound on a two-inch diameter mandrel. In other embodiments, fiber optic resonator 104 is formed from other lengths of fiber and sized of mandrel dependent on performance needs of the RFOG. Additionally, RFOG 100 includes a silicon optical bench (SiOB) 106 holding tiny ball lenses, mirrors and beam-splitters to close the loop of resonator coil 105 as well as to provide light coupling into and out of the fiber optic resonator 104.

RFOG 100 includes an MFLS to provide the light input to fiber optic resonator 104. The MFLS consists of three semiconductor lasers; a master laser 108 and two slave lasers; slave laser 1 (110) and slave laser 2 (112). The master laser 108 is locked to the fiber optic resonator 104 using the well-known Pound-Drever-Hall (PDH) stabilization technique. This is accomplished by directing a portion of the light from the master laser 108 through a phase modulator (PM3) where it is modulated to provide a PDH signal, at the CW reflection port 114 of the fiber optic resonator 104, which is demodulated by the PDH loop electronics 116. Another portion of the light from master laser 108 is directed through a phase modulator (PM4) and then to be optically mixed on photodiodes 117 and 119 with portions of the light from slave lasers 110 and 112, respectively, to generate beat notes. This is used by two sets of optical phase lock loop (OPLL) electronics 118 and 120 to phase lock the frequencies of slave laser 1 (110) and slave laser 2 (112), respectively, to the frequency of master laser 108 plus offset frequencies produced by the FM Offset Frequency Source (FM-OFS) 122 and 124 respectively. The OPLLs 118 and 120 transfer the master/resonator relative frequency stability to the slaves. Furthermore, the phase modulation imposed by PM4 is transferred to the slave lasers 110 and 112 as a common frequency modulation which is used for precise detection of the center frequencies of the CW and CCW resonance transmission peaks. The common modulation is applied at frequency *f_{C},* which is relatively low compared to the resonator linewidth.

The CW and CCW slave laser light picks up extra phase at frequencies *f₁* and*f₂*, which are relatively high compared to the resonator linewidth. The high-frequency (HF) phase modulation along with double demodulation is used to suppress optical backscatter errors. The CW resonance peaks are separated by one free-spectral range (*FSR*)*.* In this example, *f₁* is set to equal ½ an *FSR.* Therefore, when the laser carrier is exactly in the middle of two adjacent resonances, the first order upper and lower sidebands produced by the HF modulation will be at the center frequency of the corresponding upper and lower transmission peaks. (The HF modulation generates sidebands at many harmonics, but considering only the first order sidebands is sufficient to understand how the technique works). The two sidebands will interfere at the transmission port, thus producing a beat note that is at twice the HF modulation frequency, or at 2*f₁.* The method works for any HF modulation frequency that is a multiple plus a half of an FSR, or *f₁=(n+1*/*2)FSR,* where *n* is an integer.

The common modulation, *f_{c}*, can be viewed as sweeping the sidebands over the resonance peaks. When the sidebands are exactly on resonance, the transmitted beat note intensity signal at 2*f₁* is amplitude modulated at twice the common modulation frequency. When the sidebands move slightly away from the center of the resonance peaks, due to the laser carrier frequency changing, the resulting beat note will have some amplitude modulation at *f_{c}*. Double demodulating the resonator transmission output will produce an error signal that indicates when the sidebands are exactly on resonance. The resonator transmission output is first demodulated by mixer 124 at 2*f₁,* then the first demodulator output is demodulated by mixer 126 at *f_{c}*. As the laser carrier frequency is swept through many FSRs, assuming the PDH loop is not locked, and the first demodulator stage output is low-pass-filtered (to remove signals due to the common modulation). In the resulting waveform, positive going peaks correspond to when the modulation induced odd harmonic sidebands pass through resonance, and negative going peaks correspond to when the laser carrier and the even harmonic sidebands pass through resonance. The second demodulator output passes through zero with a steep slope (high sensitivity to laser frequency deviations from resonance) when either the odd sidebands or the laser carrier and even sidebands pass through resonance. The output of the second demodulator is used as a feedback loop error signal to control the laser carrier frequency to follow the resonance frequencies with a fixed offset.

To suppress backscatter errors, the CW and CCW HF modulation frequencies, *f₁* and *f₂,* are set to slightly different values. In this way, the sideband beat note signal due to backscatter from one direction will be at a different frequency than the beat note from the intended direction, and thus will be rejected by the first stage demodulator. Since *f₁* and *f₂* are slightly different, at least one cannot be set exactly to *(n+1*/*2)FSR.* However, HF modulation imperfections, such as 2^{nd} harmonic distortion and intensity modulation, can be shown to vanish when the HF modulation frequency is set to exactly *(n+1*/*2)FSR,* which is referred to as the "HF proper frequency".

When the HF modulation frequency is not at a proper frequency, the sidebands will pass through resonance at different carrier frequencies. This produces a distortion in the detected resonance lineshape, which results in a shift in the detected resonance frequency. If the HF modulation frequency is exactly at the proper frequency, the upper and lower sidebands will be on resonance at the same carrier frequency. Therefore, even if there is an imbalance in their optical power due to intensity modulation, the detected lineshapes remain symmetrical. The argument for second harmonic distortion of HF modulation is similar. As long as the HF modulation frequency separation required for suppressing backscatter errors can be small enough to allow operation close to a HF proper frequency, then backscatter errors can be adequately suppressed while having reasonable requirements on HF modulation imperfections. In one embodiment, *f₁* is 3 MHz, and *f₂* is 3.0001 MHz.

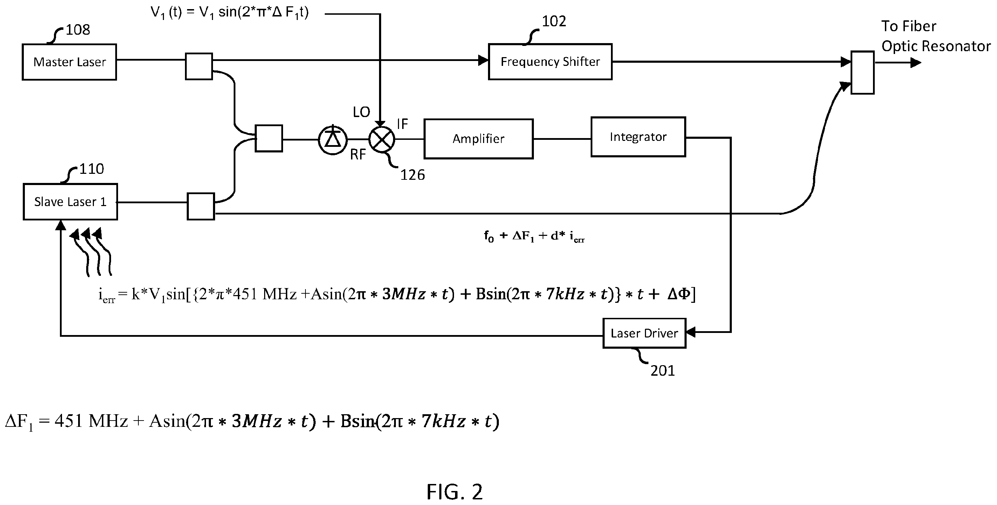

Returning to the new source of error discovered with the design of this RFOG. The problem with this design is that V₁(t) (see Fig. 2), provided to local oscillator 128, undesirably is picked up by the current from laser driver 201 that provides control current to slave laser 1 (110). This pickup occurs because the MFLS components are packaged in close proximity, and despite the fact that the channels of the MFLS are shielded to reduce crosstalk.

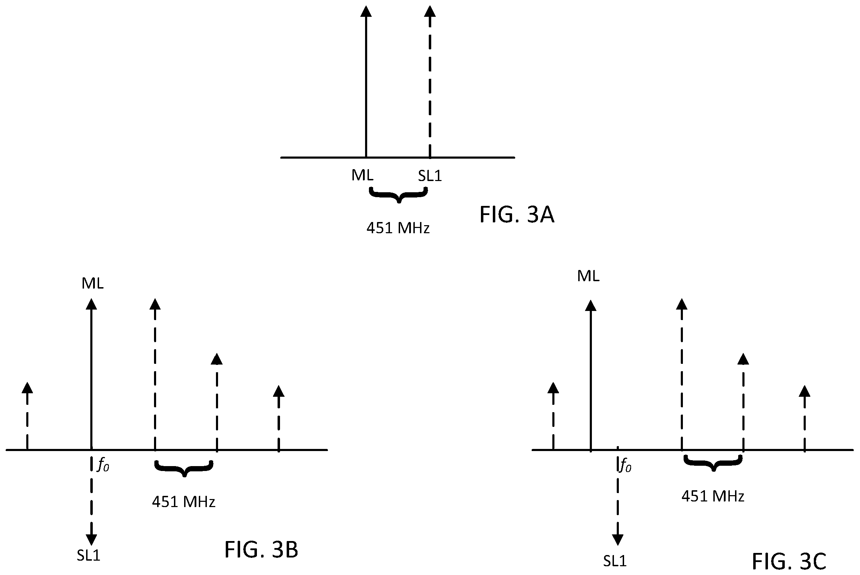

With the discovered pickup, slave laser 1 (110) receives an undesired current iₑᵣᵣ and there is also undesired frequency modulation (different from the intended time varying frequency shift) which modulates the frequency of light output by slave laser 1 (110) and puts sidebands on the frequency of light from slave laser 1 (110) that are +/- integer multiples of ΔF₁. As shown in FIG. 3A, the frequency of light (ML) from master laser 108 and the frequency of light (SL1) from slave laser 1 (110) are typically separated by 451 MHz. However, when V1(t) is undesirably picked up, the unintended laser sidebands generated by this pickup can then make some of the light from slave laser 1 (110) be at the same frequency as the light from master laser 108 as shown in FIG. 3B. So, the light from master laser 108 and light from slave laser 1 (110) interfere at low frequency. Since the light from master laser 108 and light from slave laser 1 (110) take different paths through fibers to resonator coil 105, their phases vary with the temperature. This causes large random variations in the lock of master laser 108 to the fiber optic resonator 104, and of the lock of slave laser 1 (110) and slave laser 2 (112) to the fiber optic resonator 104. In turn, it causes increased noise that is equivalent to angle random walk, and bias instability over temperature.

To prevent the above problem a frequency shifter (FS) 102 is placed in the path of the master laser 108. This frequency shifter 102 is configured to shift frequency of the light from the master laser 108 going to the resonator coil 105 prior to being combined with the light from slave laser 1 (110) and therefore it is shifted by a frequency (e.g., 100 MHz) so that it does not interfere with the bandwidths of 1) rotation rate, 2) resonance tracking loops, 3) master lock to the resonator (the PDH loop) as shown in FIG. 3C.

This has been successfully demonstrated using an acousto-optic modulator (AOM) as an instantiation of frequency shifter 102. But, since AOMs of sufficiently low cost, small size, required performance, and low-power-consumption are not commercially available currently, the frequency shifter may be implemented with a Serrodyne modulator or other appropriate chip level modulator. The Serrodyne modulation technique, for a 100 MHz frequency shift, would apply a sawtooth modulation with 2-pi phase height to a phase modulator, the sawtooth waveform having a frequency of 100 MHz. In this way, light from the master laser 108 and light from slave laser 1 (110) will not interfere at a frequency that can cause bias errors and high angle random walk.

Frequency shifter 102 is located in the path between master laser 108 and combiner 130 that combines light from master laser 108 with light from slave laser 1 (110) to be provided to fiber optic resonator 104 in the clockwise direction. In one embodiment, frequency shifter 102 is placed just prior to combiner 130. In another embodiment, frequency shifter is placed just after 1 by 2 splitter 132 in the path connected to combiner 130.

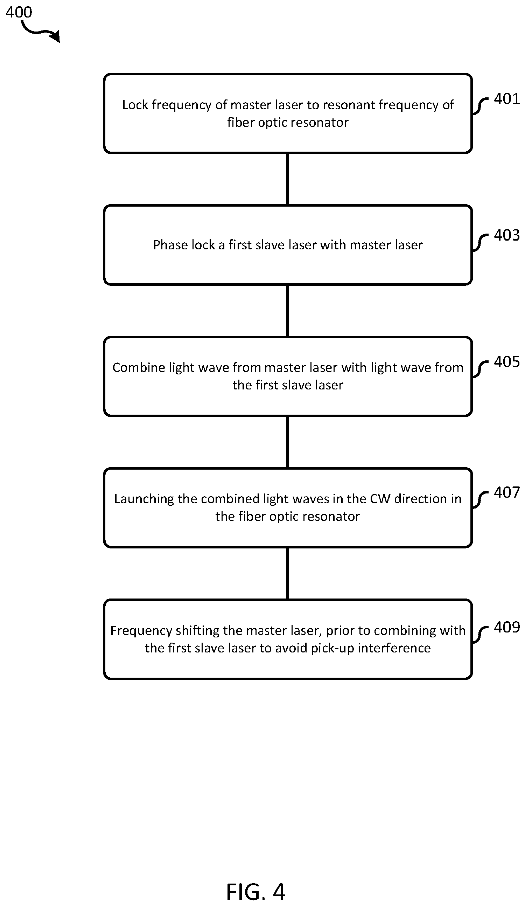

Figure 4 is a flow chart of one embodiment of a process, indicated generally at 400, for reducing interference between a light wave from a slave laser, that is corrupted as discussed above, and a light wave from a master laser in a resonator fiber optic gyroscope (RFOG) using a multi-frequency laser source (MFLS). At block 401, process 400 locks the frequency of light from the master laser to the resonant frequency of the fiber optic resonator. At block 403, process 400 phase locks the frequency of light from a first slave laser with the frequency of the master laser. At block 405, process 400 combines light from the master laser with light from the slave laser and, at block 407, process 400 launches the combined light from the master laser and the first slave laser in the CW direction in the fiber optic resonator. At block 409, the process frequency shifts the light from the master laser, prior to combining the light from the master laser with the light from the first slave laser, to avoid interference at low frequency of the light from the master laser and the light from the first slave laser. In one embodiment, the light from the master laser is frequency shifted by 100 MHz using an acousto-optic modulator, a Serrodyne modulator, or a chip level modulator.

## Claims

1. A resonator fiber optic gyroscope (RFOG) (100), comprising:
a fiber optic resonator (104);
a master laser (108) that is configured to transmit a light wave with a frequency that is locked to a resonant frequency of the fiber optic resonator;
a first slave laser (110) that is configured to transmit a light wave at a frequency that is phase locked to the frequency of the master laser in a first optical phase lock loop (118) at a first offset frequency to provide a clockwise signal (CW) to the fiber optic resonator;
a second slave laser (112) that is configured to transmit a light wave at a frequency that is phase locked to the frequency of the master laser in a second optical phase lock loop (120) at a second offset frequency to provide a counterclockwise signal (CCW) to the fiber optic resonator; and
**characterized by** comprising:
a modulator (102) that shifts the frequency of the light wave from the master laser, prior to combination of the light wave from the master laser with the light wave from the first slave laser for transmission to the fiber optic resonator, by a first frequency to prevent interference of the light wave from the master laser with the light wave from the first slave laser caused by undesired error current pick-up from the master laser in the first optical phase lock loop.

2. The RFOG of claim 1, wherein the modulator comprises an acousto-optic modulator that is configured to shift the frequency of the light wave from the master laser to a frequency that is different from the frequency of the light wave from the master laser caused by pick up by the first slave laser.

3. The RFOG of claim 1, wherein the modulator comprises a Serrodyne modulator.

4. The RFOG of claim 1, wherein the modulator is configured to shift the frequency of the light wave from the master laser by up to 100 MHz.

5. The RFOG of claim 1, wherein the modulator is located after a splitter (132) that directs the light wave from the master laser to both the first slave laser optical phase lock loop and the second slave laser optical phase lock loop.

6. The RFOG of claim 1, wherein the modulator is located before a combiner (130) that combines the light wave from the master laser with the light wave from the first slave laser.

7. The RFOG of claim 1, wherein the modulator is a chip level device.

8. A method, comprising:
locking a frequency of a light wave from a master laser to a resonant frequency of a fiber optic resonator (401);
phase locking a frequency of a light wave of a first slave laser to the frequency of the master laser in a first optical phase lock loop at a first offset frequency to provide a clockwise signal (CW) to the fiber optic resonator (403);
phase locking a frequency of a light wave of a second slave laser to the frequency of the master laser in a second optical phase lock loop at a second offset frequency to provide a counterclockwise signal (CCW) to the fiber optic resonator;
combining the light wave from the master laser with the light wave from the first slave laser (405);
launching the combined light wave from the master laser and the first slave laser in the clockwise (CW) direction in the fiber optic resonator (407); and
launching the light wave from the second slave laser in the counterclockwise (CCW) direction in the fiber optic resonator;
**characterized by**
prior to combining the light waves from the master laser and the first slave laser, shifting the frequency of the light wave from the master laser to avoid interference with a signal caused by undesired error current pick-up by the first slave laser, that includes a light wave at the frequency of the light wave from the master laser (409).

9. The method of claim 8, wherein shifting the frequency of the light wave from the master laser comprises frequency shifting the light wave from the master laser with an acousto-optic modulator, a Serrodyne modulator, or a chip level modulator.

10. The method of claim 8, wherein shifting the frequency of the light wave from the master laser comprises frequency shifting the light wave from the master laser by up to 100 MHz.

## Patentansprüche

1. Resonator-Faserkreisel (RFOG) (100), umfassend:
einen faseroptischen Resonator (104);
einen Master-Laser (108), der dazu konfiguriert ist, eine Lichtwelle mit einer Frequenz zu übertragen, die mit einer Resonanzfrequenz des faseroptischen Resonators verriegelt ist;
einen ersten Slave-Laser (110), der dazu konfiguriert ist, eine Lichtwelle mit einer Frequenz zu übertragen, die mit der Frequenz des Master-Lasers in einer ersten optischen Phasenverriegelungsschleife (118) in einer ersten Offset-Frequenz phasenverriegelt ist, um ein Signal im Uhrzeigersinn (CW) an den faseroptischen Resonator bereitzustellen;
einen zweiten Slave-Laser (112), der dazu konfiguriert ist, eine Lichtwelle mit einer Frequenz zu übertragen, die mit der Frequenz des Master-Lasers in einer zweiten optischen Phasenverriegelungsschleife (120) in einer zweiten Offset-Frequenz phasenverriegelt ist, um ein Signal gegen den Uhrzeigersinn (CCW) an den faseroptischen Resonator bereitzustellen, und
**gekennzeichnet durch** das Umfassen von:
einem Modulator (102), der vor einer Kombination der Lichtwelle von dem Master-Laser mit der Lichtwelle von dem ersten Slave-Laser die Frequenz der Lichtwelle von dem Master-Laser zur Übertragung an den faseroptischen Resonator um eine erste Frequenz verschiebt, um eine Interferenz der Lichtwelle von dem Master-Laser mit der Lichtwelle von dem ersten Slave-Laser, die durch unerwünschte Fehlerstromabnahme von dem Master-Laser in der ersten optischen Phasenverriegelungsschleife verursacht wird, zu verhindern.

2. RFOG nach Anspruch 1, wobei der Modulator einen akustooptischen Modulator umfasst, der dazu konfiguriert ist, die Frequenz der Lichtwelle von dem Master-Laser zu einer Frequenz zu verschieben, die sich von der Frequenz der Lichtwelle von dem Master-Laser, die durch Abnahme durch den ersten Slave-Laser verursacht wird, unterscheidet.

3. RFOG nach Anspruch 1, wobei der Modulator einen Serrodyne-Modulator umfasst.

4. RFOG nach Anspruch 1, wobei der Modulator dazu konfiguriert ist, die Frequenz der Lichtwelle von dem Master-Laser um bis zu 100 MHz zu verschieben.

5. RFOG nach Anspruch 1, wobei der Modulator nach einem Splitter (132) platziert ist, der die Lichtwelle von dem Master-Laser zu sowohl der optischen Phasenverriegelungsschleife des ersten Slave-Lasers als auch zu der optischen Phasenverriegelungsschleife des zweiten Slave-Lasers lenkt.

6. RFOG nach Anspruch 1, wobei der Modulator vor einem Kombinierer (130) platziert ist, der die Lichtwelle von dem Master-Laser mit der Lichtwelle von dem ersten Slave-Laser kombiniert.

7. RFOG nach Anspruch 1, wobei der Modulator eine Chipebene-Vorrichtung ist.

8. Verfahren, umfassend:
Verriegeln einer Frequenz einer Lichtwelle von einem Master-Laser mit einer Resonanzfrequenz eines faseroptischen Resonators (401);
Phasenverriegeln einer Frequenz einer Lichtwelle eines ersten Slave-Lasers mit der Frequenz des Master-Lasers in einer ersten optischen Phasenverriegelungsschleife in einer ersten Offset-Frequenz, um ein Signal im Uhrzeigersinn (CW) an den faseroptischen Resonator (403) bereitzustellen;
Phasenverriegeln einer Frequenz einer Lichtwelle eines zweiten Slave-Lasers mit der Frequenz des Master-Lasers in einer zweiten optischen Phasenverriegelungsschleife in einer zweiten Offset-Frequenz, um ein Signal gegen den Uhrzeigersinn (CCW) an den faseroptischen Resonator bereitzustellen;
Kombinieren der Lichtwelle von dem Master-Laser mit der Lichtwelle von dem ersten Slave-Laser (405);
Auslösen der kombinierten Lichtwelle von dem Master-Laser und dem ersten Slave-Laser in der Richtung im Uhrzeigersinn (CW) in dem faseroptischen Resonator (407); und
Auslösen der Lichtwelle von dem zweiten Slave-Laser in der Richtung gegen den Uhrzeigersinn (CCW) in dem faseroptischen Resonator;
**gekennzeichnet durch**:
vor dem Kombinieren der Lichtwellen von dem Master-Laser und dem ersten Slave-Laser, Verschieben der Frequenz der Lichtwelle von dem Master-Laser, um eine Interferenz mit einem Signal zu vermeiden, das von einer unerwünschten Fehlerstromabnahme durch den ersten Slave-Laser verursacht wird und das eine Lichtwelle in der Frequenz der Lichtwelle von dem Master-Laser (409) beinhaltet.

9. Verfahren nach Anspruch 8, wobei das Verschieben der Frequenz der Lichtwelle von dem Master-Laser das Frequenz-Verschieben der Lichtwelle von dem Master-Laser mit einem akustooptischen Modulator, einem Serrodyne-Modulator oder einem Chipebenen-Modulator umfasst.

10. Verfahren nach Anspruch 8, wobei das Verschieben der Frequenz der Lichtwelle von dem Master-Laser das Frequenz-Verschieben der Lichtwelle von dem Master-Laser um bis zu 100 MHz umfasst.

## Revendications

1. Gyroscope à fibre optique à résonateur (RFOG) (100), comprenant :
un résonateur à fibre optique (104) ;
un laser maître (108) configuré pour émettre une onde lumineuse avec une fréquence qui est verrouillée sur une fréquence de résonance du résonateur à fibre optique ;
un premier laser esclave (110) configuré pour émettre une onde lumineuse à une fréquence qui est verrouillée en phase avec la fréquence du laser maître dans une première boucle à verrouillage de phase optique (118) à une première fréquence de décalage afin de fournir un signal horaire (CW) au résonateur à fibre optique ;
un deuxième laser esclave (112) configuré pour émettre une onde lumineuse à une fréquence qui est verrouillée en phase avec la fréquence du laser maître dans une deuxième boucle à verrouillage de phase optique (120) à une deuxième fréquence de décalage afin de fournir un signal antihoraire (CCW) au résonateur à fibre optique ; et
**caractérisé en ce qu'**il comprend :
un modulateur (102) qui décale la fréquence de l'onde lumineuse provenant du laser maître, avant la combinaison de l'onde lumineuse provenant du laser maître avec l'onde lumineuse provenant du premier laser esclave pour la transmission vers le résonateur à fibre optique, d'une première fréquence afin d'éviter une interférence de l'onde lumineuse provenant du laser maître avec l'onde lumineuse provenant du premier laser esclave causée par une captation parasite de courant d'erreur provenant du laser maître dans la première boucle à verrouillage de phase optique.

2. RFOG de la revendication 1, dans lequel le modulateur comprend un modulateur acousto-optique qui est configuré pour décaler la fréquence de l'onde lumineuse provenant du laser maître vers une fréquence qui est différente de la fréquence de l'onde lumineuse provenant du laser maître, causée par une captation par le premier laser esclave.

3. RFOG de la revendication 1, dans lequel le modulateur comprend un modulateur Serrodyne.

4. RFOG de la revendication 1, dans lequel le modulateur est configuré pour décaler la fréquence de l'onde lumineuse provenant du laser maître jusqu'à 100 MHz.

5. RFOG de la revendication 1, dans lequel le modulateur est situé après un séparateur optique (132) qui dirige l'onde lumineuse provenant du laser maître à la fois vers la boucle à verrouillage de phase optique associée au premier laser esclave et vers la boucle à verrouillage de phase optique associée au deuxième laser esclave.

6. RFOG de la revendication 1, dans lequel le modulateur est situé avant un combineur (130) qui combine l'onde lumineuse provenant du laser maître avec l'onde lumineuse provenant du premier laser esclave.

7. RFOG de la revendication 1, dans lequel le modulateur est un dispositif intégré sur puce.

8. Procédé comprenant :
le verrouillage d'une fréquence d'une onde lumineuse provenant d'un laser maître sur une fréquence de résonance d'un résonateur à fibre optique (401) ;
le verrouillage de phase d'une fréquence d'une onde lumineuse d'un premier laser esclave sur la fréquence du laser maître dans une première boucle à verrouillage de phase optique à une première fréquence de décalage afin de fournir un signal horaire (CW) au résonateur à fibre optique (403) ;
le verrouillage de phase d'une fréquence d'une onde lumineuse d'un deuxième laser esclave sur la fréquence du laser maître dans une deuxième boucle à verrouillage de phase optique à une deuxième fréquence de décalage afin de fournir un signal antihoraire (CCW) au résonateur à fibre optique ;
la combinaison de l'onde lumineuse provenant du laser maître avec l'onde lumineuse provenant du premier laser esclave (405) ;
l'injection de l'onde lumineuse combinée provenant du laser maître et du premier laser esclave dans le sens horaire (CW) dans le résonateur à fibre optique (407) ; et
l'injection de l'onde lumineuse provenant du deuxième laser esclave dans le sens antihoraire (CCW) dans le résonateur à fibre optique ;
**caractérisé en ce que**,
avant la combinaison des ondes lumineuses provenant du laser maître et du premier laser esclave, le décalage de la fréquence de l'onde lumineuse provenant du laser maître afin d'éviter l'interférence avec un signal causé par une captation parasite de courant d'erreur par le premier laser esclave, qui inclut une onde lumineuse à la fréquence de l'onde lumineuse provenant du laser maître (409).

9. Procédé de la revendication 8, dans lequel le décalage de la fréquence de l'onde lumineuse provenant du laser maître comprend le décalage de fréquence de l'onde lumineuse provenant du laser maître au moyen d'un modulateur acousto-optique, d'un modulateur Serrodyne ou d'un modulateur intégré sur puce.

10. Procédé de la revendication 8, dans lequel le décalage de la fréquence de l'onde lumineuse provenant du laser maître comprend un décalage de fréquence de l'onde lumineuse provenant du laser maître jusqu'à 100 MHz.
